# EUROPÄISCHE PATENTANMELDUNG

(11) **EP 4 415 200 A1**
(43) Veröffentlichungstag der Anmeldung: **14.08.2024**
(21) Anmeldenummer: 24154314.9
(22) Anmeldetag: 29.01.2024
(51) Int. Cl.: H02J 3/16, H02J 3/38, H02J 13/00

(54) **SYSTEM UND VERFAHREN ZUR STEUERUNG VON SYSTEMKOMPONENTEN EINES ENERGIEVERSORGUNGSNETZES**

(30) Priorität: 09.02.2023 DE 102023103189
(71) Anmelder: E.ON SE, 45131 Essen (DE)
(72) Erfinder: Berazaluce Minondo, Inigo, 45470 Mühlheim an der Ruhr (DE); Hernandez Salmeron, Luis Arturo, 40237 Düsseldorf (DE)
(74) Vertreter: Gunzelmann, Rainer

(57) **Zusammenfassung**

Ein Steuerungssystem für Systemkomponenten eines Verteilnetzes für elektrische Energie weist eine Steuerungsvorrichtung auf, die dazu eingerichtet ist, eine oder mehrere Systemkomponente/n eines ersten Verteilnetzes für elektrische Energie basierend auf zumindest einem Betriebsparameter eines zweiten Verteilnetzes für elektrische Energie zu steuern und/oder zu regeln, wobei das erste Verteilnetz eine niedrigere Netzspannung aufweist als das zweite Verteilnetz und wobei das erste Verteilnetz durch einen Transformator mit dem zweiten Verteilnetz gekoppelt ist.

## Beschreibung

Hier werden ein System und ein Verfahren zur Steuerung von Systemkomponenten eines Energieversorgungsnetzes offenbart.

Private Haushalte, kleinere und mittlere Unternehmen, öffentliche Einrichtungen sowie große Teile der öffentlichen Infrastruktur werden durch lokale Niederspannungsnetze mit elektrischer Betriebsenergie versorgt. Die Niederspannungsnetze selbst sind nur in Ausnahmefällen an größere Kraftwerke zur Erzeugung von elektrischer Energie angeschlossen. Vielmehr werden die Niederspannungsnetze zur Versorgung der Verbraucher von elektrischer Energie meist durch regionale oder überregionale Mittelspannungsnetze mit elektrischer Betriebsenergie gespeist. Hierzu werden die Niederspannungsnetze und die Mittelspannungsnetze miteinander durch eine Transformatorvorrichtung, zum Beispiel durch die Transformatorvorrichtung einer Umspannstation, verbunden oder gekoppelt.

Ein technisches Problem hierbei ist, dass die meisten der existierenden Niederspannungsnetze als reine Leistungssenken, d.h. als Energieverteilungsinfrastruktur zur Versorgung von Verbrauchern elektrischer Energie, konzipiert und realisiert wurden. Eine Leistungseinspeisung von einem Niederspannungsnetz in ein Mittelspannungsnetz ist in den meisten Fällen nicht vorgesehen. Durch die zunehmende Verbreitung dezentraler Stromerzeugungsvorrichtungen, zum Beispiel von Photovoltaikanlagen auf Hausdächern und kleineren Biomasseverstromungseinrichtungen, können Niederspannungsnetze nicht mehr nur als reine Leistungssenken betrachtet und betrieben werden.

Weiter führt die zunehmende Verbreitung von dezentralen Stromerzeugungsvorrichtungen dazu, dass sich die Leistungsaufnahme oder Leistungsabgabe innerhalb eines Niederspannungsnetzes kurzfristig ändert, zum Beispiel bei einer hohen Dichte von Solarenergieanlagen, die gemeinsam einer kurzfristigen Wetteränderung ausgesetzt sind. Diese kurzfristig und unvorhergesehen auftretenden Änderungen der Leistungsaufnahme oder Leistungsabgabe innerhalb eines Niederspannungsnetzes können jedoch problematisch für den Betrieb eines mit dem Niederspannungsnetz gekoppelten Mittelspannungsnetzes sein, zum Beispiel weil das Mittelspannungsnetz kurzfristig nur eine bestimmte Menge zusätzlicher Leistung aus dem Niederspannungsnetz aufnehmen kann.

Eine Möglichkeit diesen technischen Problemen zu begegnen ist der Ausbau und die Verstärkung der bestehenden Netzinfrastruktur. Einerseits ist dieses jedoch teuer und zeitaufwendig, andererseits bestehen die beschriebenen technischen Probleme auch bei einer Kompensation ihrer Auswirkungen durch eine verstärkte Netzinfrastruktur zumindest im Grundsatz weiter.

Es besteht daher die Aufgabe ein verbessertes Steuerungssystem zur Steuerung von Komponenten eines Verteilnetzes für elektrische Energie und ein verbessertes Verfahren zur Steuerung von Komponenten eines Verteilnetzes für elektrische Energie bereitzustellen.

Diese Aufgabe wird durch den Gegenstand des Anspruchs 1 sowie durch das Verfahren nach dem unabhängigen Verfahrensanspruch gelöst. Weitere Ausgestaltungen der beanspruchten Gegenstände und/oder Verfahren werden durch die abhängigen Ansprüche definiert.

Ein Steuerungssystem für Systemkomponenten eines Verteilnetzes für elektrische Energie weist eine Steuerungsvorrichtung auf, die dazu eingerichtet ist, eine oder mehrere System-komponente/n eines ersten Verteilnetzes für elektrische Energie basierend auf zumindest einem, insbesondere aktuellen, Betriebsparameter eines zweiten Verteilnetzes für elektrische Energie zu steuern und/oder zu regeln. Das erste Verteilnetz weist eine niedrigere Netzspannung auf als das zweite Verteilnetz. Weiter ist das erste Verteilnetz durch einen Transformator mit dem zweiten Verteilnetz gekoppelt.

Das erste Verteilnetz für elektrische Energie kann ein Niederspannungsnetz und/oder ein Verteilnetz zur Netzanbindung von Verbrauchern und/oder Erzeugern von elektrischer Energie sein.

Das zweite Verteilnetz für elektrische Energie kann ein Mittelspannungsnetz und/oder ein Verteilnetz zur Energieversorgung jeweils weiterer Verteilnetze, insbesondere weiterer Verteilnetze mit jeweils niedrigerer Netzspannung als das zweite Verteilnetz, sein.

Der Transformator kann ein Teil einer Transformatorstation sein, welche das erste Verteilnetz mit dem zweiten Verteilnetz koppelt und/oder verbindet.

Eine Systemkomponente eines Verteilnetzes ist eine mit dem Netz unmittelbar oder mittelbar gekoppelte Vorrichtung zur Erzeugung elektrischer Energie und/oder Energiespeichervorrichtung und/oder elektrische Energie verbrauchende Vorrichtung. Mit anderen Worten ist jede Vorrichtung, die mit einem Verteilnetz für elektrische Energie verbunden ist und Energie aus dem Netz speichert und/oder elektrische Energie aus dem Netz verbraucht und/oder elektrische Energie erzeugt und in das Netz einspeist eine Systemkomponente des Verteilnetzes.

Ein Betriebsparameter eines Verteilnetzes ist ein statischer oder nicht statischer Zustand an einem bestimmten Ort oder (Mess-)Punkt eines Verteilnetzes. Die Anzahl der mit einem Verteilnetz verbundenen Systemkomponenten kann daher ebenso ein Betriebsparameter sein wie eine bestimmte Netzspannung, die zu einem bestimmten Zeitpunkt an einem Messpunkt des Verteilnetzes anliegt. Ein Betriebsparameter kann auch verschiedene Informationen über ein Verteilnetz für elektrische Energie zusammenfassen. Zum Beispiel kann ein Betriebsparameter Informationen über die Anzahl der mit einem Verteilnetz verbundenen Systemkomponenten und über zu verschiedenen Zeitpunkten gemessene Netzspannungen an verschiedenen Messpunkten eines Verteilnetzes aufweisen.

Mit anderen Worten ist ein Betriebsparameter eines Verteilnetzes eine Information über das Verteilnetz, wobei diese Information zum Beispiel Zeit-, Orts- und/oder Zustandsinformationsanteile umfassen kann. Ein aktueller Betriebsparameter eines Verteilnetzes ist ein Betriebsparameter, der eine oder mehrere Zeit-, Orts- und/oder Zustandsinformationen zum Zeitpunkt der Steuerung und/oder Regelung einer Systemkomponente oder zu einem lediglich um die Dauer eines Steuer- und/oder Regelungsvorgangs sowie um die Dauer von Signallaufzeiten zu und/oder von der Steuerungsvorrichtung verzögerten Zeitpunkt umfasst.

Das Steuern und/oder Regeln einer Systemkomponente eines Verteilnetzes kann unmittelbar durch ein Übermitteln oder Senden einer Steuerungs- und/oder Regelungsinformation von der Steuerungsvorrichtung an die Systemkomponente erfolgen. Alternativ oder ergänzend kann das Steuern und/oder Regeln einer Systemkomponente auch dadurch verwirklicht werden, dass die Steuerungsvorrichtung dazu eingerichtet ist, eine Steuerungs- und/oder Regelungsinformation an eine, insbesondere lokale und/oder dislozierte, zweite Steuerungsvorrichtung zu übermitteln oder zu senden, wobei die zweite Steuerungsvorrichtung dazu eingerichtet sein kann, die Systemkomponente unmittelbar oder mittelbar basierend auf der Steuerungs- und/oder Regelungsinformation zu steuern und/oder zu regeln.

Ein Vorteil des Systems, das die Systemkomponenten des ersten Verteilnetzes für elektrische Energie basierend auf einem oder mehreren Betriebsparametern des zweiten Verteilnetzes steuern und/oder regeln kann ist, dass hierdurch einer Überlastung des zweiten Verteilnetzes, welches zumindest mit einigen Systemkomponenten des ersten Verteilnetzes nicht unmittelbar verbunden ist, auch im Falle sich schnell ändernder Leistungsaufnahmen oder Leistungsabgaben entgegengewirkt werden kann. Die Steuerungsvorrichtung kann zum Beispiel anhand eines oder mehrerer Betriebsparameter des zweiten Netzes, welches zum Beispiel ein Mittelspannungsnetz sein kann, ermitteln, ob weitere elektrische Energie in das Netz eingespeist werden kann. Ist dieses nicht der Fall, kann die Steuerungsvorrichtung zum Beispiel die Deaktivierung einiger Systemkomponenten des ersten Netzes, welches zum Beispiel ein Niederspannungsnetz sein kann, veranlassen. Zum Beispiel kann die Steuerungsvorrichtung veranlassen, dass eine oder mehrere Solarenergieanlagen, die mit dem ersten Netz gekoppelt sind, vorübergehend deaktiviert werden und/oder vorübergehend keine elektrische Energie in das erste Verteilnetz einspeisen. Alternativ oder ergänzend kann die Steuerungsvorrichtung auch veranlassen, dass ein Betriebsmodus einer gesteuerten Systemkomponente, zum Beispiel einer Solarenergieanlage, vorübergehend oder dauerhaft geändert wird. Zum Beispiel kann der Betriebsmodus einer Solarenergieanlage von einem aktiven in einen reaktiven Betriebsmodus geändert werden oder umgekehrt.

Die Steuerungsvorrichtung kann in einer Variante im Bereich eines Kopplungsorts des ersten und zweiten Verteilnetzes ausgebildet sein, zum Beispiel in einem Umspannwerk und/oder als Teil eines Umspannwerks. Dieses ist jedoch nicht bei allen Ausführungsformen des Steuerungssystems notwendig. Die Steuerungsvorrichtung kann zum Beispiel auch von einem Umspannwerk und/oder von dem Transformator räumlich beabstandet sein.

Eine oder mehrere Systemkomponente/n des ersten Verteilnetzes können von der Steuerungsvorrichtung und/oder von dem Transformator räumlich beabstandet sein. Zum Beispiel können sich eine oder mehrere durch die Steuerungsvorrichtung gesteuerte Systemkomponenten innerhalb von oder auch auf privaten oder öffentlichen Gebäuden befinden, während die Steuerungsvorrichtung zum Beispiel innerhalb eines Umspannwerks disloziert ist.

Zumindest eine Systemkomponente des ersten Verteilnetzes kann ein Energieverbraucher, zum Beispiel eine mit elektrischem Strom betriebene Heizung oder eine mit elektrischem Strom betriebene Maschine, sein.

Alternativ oder ergänzend kann zumindest eine Systemkomponente des ersten Verteilnetzes ein Erzeuger von elektrischer Energie, zum Beispiel eine Solarenergieanlage oder eine Biomasseverstromungsanlage, sein.

In einer Variante kann zumindest eine Systemkomponente des ersten Verteilnetzes ein mit elektrischer Energie aufladbarer und/oder entladebarer Energiespeicher, zum Beispiel ein Akkumulator oder ein mit elektrischer Energie betriebenes Kraftfahrzeug, sein. Optional kann die Steuerungsvorrichtung, basierend auf Betriebsparametern des ersten und/oder des zweiten Verteilnetzes für elektrische Energie, eine Aufladung des Energiespeichers mit elektrischer Energie aus dem ersten Verteilnetz oder die Entladung von elektrischer Energie aus dem Energiespeicher in das erste Verteilnetz veranlassen.

Die Steuerungsvorrichtung kann weiter dazu eingerichtet sein, die eine oder mehreren Systemkomponente/n des ersten Verteilnetzes für elektrische Energie basierend auf zumindest einem aktuellen Betriebsparameter des ersten und des zweiten Verteilnetzes für elektrische Energie zu steuern und/oder zu regeln.

Ein Vorteil hierbei ist, dass neben Betriebsparametern des zweiten Verteilnetzes auch Betriebsparameter des ersten Verteilnetzes berücksichtigt werden können. Die Steuerung oder Regelung einer oder mehrerer Systemkomponenten des ersten Verteilnetzes kann durch die Erweiterung der Art und/oder der Anzahl der durch die Steuerungsvorrichtung ausgewerteten Betriebsparameter verbessert werden.

Ein Betriebsparameter des ersten Verteilnetzes und/oder ein Betriebsparameter des zweiten Verteilnetzes kann zum Beispiel Informationen über eine Gleichspannung, eine Wechselspannung, eine Gleichstromstärke, eine Wechselstromstärke, eine Scheinleistung, eine Wirkleistung, eine Blindleistung und/oder eine Phasenverschiebung an einem vorbestimmten Messpunkt innerhalb des ersten und/oder zweiten Verteilnetzes umfassen.

Alternativ oder ergänzend kann ein Betriebsparameter des ersten Verteilnetzes und/oder ein Betriebsparameter des zweiten Verteilnetzes Informationen über einen Aktivierungszustand und/oder einen Betriebsmodus einer Systemkomponente des ersten und/oder des zweiten Verteilnetzes umfassen.

Optional kann ein Betriebsparameter des ersten Verteilnetzes und/oder ein Betriebsparameter des zweiten Verteilnetzes auch Informationen über die Art und/oder Anzahl der Systemkomponenten des ersten und/oder zweiten Verteilnetzes umfassen.

In einer Variante kann das Steuerungssystem weiter eine Betriebsparametererfassungsvorrichtung aufweisen, die dazu eingerichtet ist, zumindest einen Betriebsparameter des ersten Verteilnetzes und/oder zumindest einen Betriebsparameter des zweiten Verteilnetzes zu erfassen.

Eine Betriebsparametererfassungsvorrichtung kann zum Beispiel einen Sensor und/oder eine Messtation umfassen. Die Betriebsparametererfassungsvorrichtung kann insbesondere dazu eingerichtet sein, Informationen über eine Gleichspannung, eine Wechselspannung, eine Gleichstromstärke, eine Wechselstromstärke, eine Scheinleistung, eine Wirkleistung, eine Blindleistung und/oder eine Phasenverschiebung an einem vorbestimmten Messpunkt innerhalb des ersten und/oder des zweiten Verteilnetzes zu erfassen.

Ein Vorteil hierbei ist, dass das Steuerungssystem effizient relevante Betriebsparameter, zum Beispiel eine Netzspannung des zweiten Verteilnetzes im Bereich eines Transformators oder eines Umspannwerks, erfassen kann.

Alternativ oder ergänzend kann das Steuerungssystem weiter eine Empfangseinheit aufweisen, die dazu eingerichtet ist, ein Signal mit einer Information über zumindest einen Betriebsparameter des ersten Verteilnetzes und/oder ein Signal mit einer Information über zumindest einen Betriebsparameter des zweiten Verteilnetzes zu empfangen. Die Empfangseinheit kann dazu eingerichtet sein, einen Betriebsparameter über eine drahtlose oder nicht drahtlose Kommunikationsverbindung zu empfangen.

Ein Vorteil hierbei ist, dass das Steuerungssystem auch auf Betriebsparameter von vergleichsweise weiter entfernten Mess- oder Erfassungsstellen zugreifen kann. Die Steuerungsvorrichtung kann hierdurch zum Beispiel auch Informationen über eine Netzspannung des zweiten Verteilnetzes in weiter entfernten Umspannwerken und/oder an weiter entfernten Messpunkten auswerten.

Weiter kann das Steuerungssystem eine Sendeeinheit aufweisen, die dazu eingerichtet ist, ein Signal mit einer Steuer- und/oder Regelungsinformation an eine, insbesondere von der Steuerungsvorrichtung und der Sendeeinheit räumlich beabstandete, Systemkomponente des ersten Verteilnetzes zu senden. Alternativ oder ergänzend kann die Sendeeinheit auch dazu eingerichtet sein, ein Signal mit einer Steuer- und/oder Regelungsinformation an eine, insbesondere von der Steuerungsvorrichtung und der Sendeeinheit räumlich beabstandete, zweite Steuerungsvorrichtung zu senden, wobei die zweite Steuerungsvorrichtung dazu eingerichtet sein kann, die Systemkomponente unmittelbar oder mittelbar basierend auf der Steuerungs- und/oder Regelungsinformation zu steuern und/oder zu regeln.

Optional kann die Sendeeinheit eine kombinierte Sende- und Empfangseinheit sein, welche weiter dazu eingerichtet ist, ein Signal mit einer Information über zumindest einen Betriebsparameter des ersten Verteilnetzes und/oder ein Signal mit einer Information über zumindest einen Betriebsparameter des zweiten Verteilnetzes zu empfangen.

In einer Variante kann die Sendeeinheit dazu eingerichtet sein, mittels Powerline Communication mit zumindest einer Systemkomponente des ersten Verteilnetzes zu kommunizieren.

Ein Vorteil hierbei ist, dass das Steuerungssystem die Verteilnetze selbst zur effizienten Kommunikation mit den Systemkomponenten nutzen kann.

Alternativ oder ergänzend kann die Sendeeinheit auch dazu eingerichtet sein, mit einer drahtlosen oder nicht drahtlosen Kommunikationsverbindung, zum Beispiel mit einer WPAN- oder LAN-Verbindung, mit zumindest einer Systemkomponente des ersten Verteilnetzes zu kommunizieren.

In einer Variante kann die Steuerungsvorrichtung weiter dazu eingerichtet sein, eine technische Spezifikation des ersten und/oder zweiten Verteilnetzes zu speichern und/oder zu erfassen. Alternativ oder ergänzend kann die Steuerungsvorrichtung weiter dazu eingerichtet sein, eine oder mehrere Systemkomponente/n des ersten Verteilnetzes zusätzlich auch basierend auf der erfassten technischen Spezifikation und/oder basierend auf einer vorbestimmten technischen Spezifikation für ein Verteilnetz zu steuern und/oder zu regeln.

Eine technische Spezifikation eines Verteilnetzes, auch als "Grid Code" bezeichnet, kann sich regional und/oder von Nation zu Nation unterscheiden. In einer Variante können verschiedene vorbekannte regionale und/oder nationale Spezifikationen oder "Grid Codes" für Verteilnetze in der Steuerungsvorrichtung gespeichert sein. Die Steuerungsvorrichtung kann dazu eingerichtet sein, anhand einer ausgelesenen oder eingegebenen Kennung der Spezifikation oder des "Grid Codes" und/oder anhand von erfassten oder empfangenen Betriebsparametern zu bestimmen, welche technischen Spezifikationen das erste und/oder das zweite Verteilnetz aufweist. Alternativ kann eine vorbestimmte Spezifikation für ein Verteilnetz auch manuell in die Steuerungsvorrichtung eingegeben und/oder für diese bestimmt werden.

Ein Vorteil hierbei ist, dass die Einsetzbarkeit des Steuerungssystems verbessert wird. Insbesondere kann das Steuerungssystem ohne wesentliche Anpassungen in verschiedenen Einsatzumgebungen, zum Beispiel in verschiedenen Staaten mit jeweils unterschiedlichen technischen Spezifikationen für Verteilnetze oder "Grid Codes" eingesetzt werden. Das Steuerungssystem kann die Steuerung oder Regelung von Systemkomponenten in diesen Fällen selbstständig oder durch einen Bediener gesteuert an die jeweiligen nationalen und/oder regionalen Erfordernisse und/oder Rahmenbedingungen anpassen.

Weiter kann die Steuerungsvorrichtung dazu eingerichtet sein, eine oder mehrere Systemkomponente/n des ersten Verteilnetzes derart zu steuern und/oder zu regeln, dass eine oder mehrere Systemkomponenten aktiviert und/oder deaktiviert werden.

Alternativ oder ergänzend kann ein Betriebsmodus einer Systemkomponente durch die Steuerungsvorrichtung geändert werden. Insbesondere kann ein aktiver Betriebsmodus für eine Systemkomponente in einen reaktiven Betriebsmodus für eine Systemkomponente geändert werden und/oder ein reaktiver Betriebsmodus für eine Systemkomponente in einen aktiven Betriebsmodus für eine Systemkomponente geändert werden.

Zum Beispiel kann der Betriebsmodus einer Stromerzeugungs- oder Solarenergieanlage, insbesondere der Betriebsmodus eines Wechselrichters oder Inverters einer Stromerzeugungs- oder Solarenergieanlage, durch die Steuerungsvorrichtung basierend auf einem Betriebsparameter des ersten und/oder des zweiten Verteilnetzes geändert werden.

In einer Variante kann die Steuerungsvorrichtung dazu eingerichtet sein, den Betriebsmodus einer Stromerzeugungs- oder Solarenergieanlage von einem aktiven Betriebsmodus in einen reaktiven Betriebsmodus zu ändern und/oder den Betriebsmodus einer Stromerzeugungs- oder Solarenergieanlage von einem reaktiven Betriebsmodus in einen aktiven Betriebsmodus zu ändern.

Die Steuerungsvorrichtung kann dazu eingerichtet sein, einen Betriebsmodus einer Stromerzeugungs- oder Solarenergieanlage, insbesondere einen Betriebsmodus eines Wechselrichters einer Stromerzeugungs- oder Solarenergieanlage, zu aktivieren und/oder zu deaktivieren, bei welchem die Ausgangsleistung der Stromerzeugungs- oder Solarenergieanlage oder des Wechselrichters in Abhängigkeit von einer an der Stromerzeugungs- oder Solarenergieanlage anliegenden Netzspannung, zum Beispiel von einer an der Stromerzeugungs- oder Solarenergieanlage anliegenden Netzspannung des ersten Verteilnetzes, verändert wird. Ein solcher Betriebsmodus kann als aktiver Betriebsmodus oder Wirkleistungsbetriebsmodus bezeichnet werden.

Alternativ oder ergänzend kann die Steuerungsvorrichtung dazu eingerichtet sein, einen Betriebsmodus einer Stromerzeugungs- oder Solarenergieanlage, insbesondere einen Betriebsmodus eines Wechselrichters einer Stromerzeugungs- oder Solarenergieanlage zu aktivieren und/oder zu deaktivieren, bei dem ein Verhältnis zwischen Blindleistungsanteil und Wirkleistungsanteil der Ausgangsleistung der Stromerzeugungs- oder Solarenergieanlage oder des Wechselrichters in Abhängigkeit von einer an der Stromerzeugungs- oder Solarenergieanlage anliegenden Netzspannung, zum Beispiel von einer an der Stromerzeugungs- oder Solarenergieanlage anliegenden Netzspannung des ersten Verteilnetzes, verändert wird. Ein solcher Betriebsmodus kann als reaktiver Betriebsmodus oder Scheinleistungsbetriebsmodus bezeichnet werden.

Ein Verfahren zur Steuerung von Systemkomponenten eines Verteilnetzes für elektrische Energie umfasst die Schritte:
- Ermitteln eines Betriebsparameters eines zweiten Verteilnetzes für elektrische Energie;
- Steuern oder Regeln einer Systemkomponente eines ersten Verteilnetzes für elektrische Energie basierend auf dem ermittelten Betriebsparameter des zweiten Verteilnetzes für elektrische Energie, wobei das erste Verteilnetz eine niedrigere Netzspannung aufweist als das zweite Verteilnetz, und wobei das erste Verteilnetz durch einen Transformator mit dem zweiten Verteilnetz gekoppelt ist.

Optional kann das Verfahren weiter zumindest einen der folgenden Schritte umfassen:
- Erfassen zumindest eines Betriebsparameters des ersten Verteilnetzes und/oder zumindest eines Betriebsparameters des zweiten Verteilnetzes mit einer Betriebsparametererfassungsvorrichtung;
- Empfangen eines Signals mit einer Information über zumindest einen Betriebsparameter des ersten Verteilnetzes und/oder eines Signals mit einer Information über zumindest einen Betriebsparameter des zweiten Verteilnetzes mit einer Empfangseinheit;
- Senden eines Signals mit einer Steuer- und/oder Regelungsinformation an eine, insbesondere von der Steuerungsvorrichtung und der Sendeeinheit räumlich beabstandete, Systemkomponente des ersten Verteilnetzes mit einer Sendeeinheit.

Die vorangehend beschriebenen Varianten schließen sich gegenseitig ausdrücklich nicht aus und können sich jeweils gegenseitig ergänzend in einem gemeinsamen System implementiert werden.

Weiter versteht es sich, dass die zuvor erläuterten beispielhaften Ausführungsformen nicht abschließend sind und den hier offenbarten Gegenstand nicht beschränken. Insbesondere ist für den Fachmann ersichtlich, dass er die beschriebenen Merkmale beliebig miteinander kombinieren kann und/oder verschiedene Merkmale weglassen kann, ohne dabei von dem hier offenbarten Gegenstand abzuweichen.

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen alle beschriebenen und/oder bildlich dargestellten Merkmale für sich oder in beliebiger Kombination die hier offenbarten Gegenstände.
- Fig. 1: zeigt schematisch ein Beispiel für ein erstes Verteilnetz mit mehreren Systemkomponenten.
- Fig. 2: zeigt ein Ablaufdiagramm für ein Verfahren zur Steuerung von Systemkomponenten eines Verteilnetzes für elektrische Energie.
- Fig. 3: zeigt ein Beispiel für einen Betriebsmodus eines Inverters für einen Erzeuger von elektrischer Energie.
- Fig. 4: zeigt ein weiteres Bespiel für den Betriebsmodus eines Inverters für einen Erzeuger von elektrischer Energie.

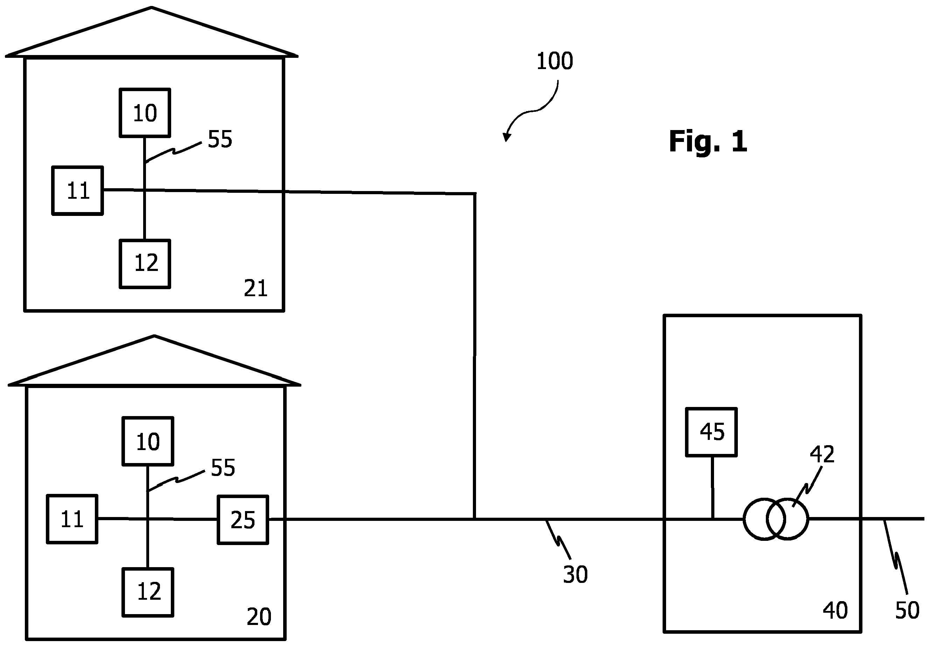

Die Fig. 1 zeigt eine schematische Darstellung ein Steuerungssystem 100 für Systemkomponenten 10, 11, 12 eines Verteilnetzes 30 für elektrische Energie mit einer Zentraleinheit 40 und einer Vielzahl von Häusern, von denen zwei Häuser 20 und 21 exemplarisch gezeigt sind. Selbstverständlich können auch weitere, nicht gezeigte, Verbraucher und/oder Erzeuger von elektrischer Energie an das Verteilnetz 30 angeschlossen sein, zum Beispiel Straßenbeleuchtungen und/oder Biomasseverstromungsanlagen.

Bei dem gezeigten Verteilnetz 30 handelt es sich um ein Niederspannungsnetz, das von einem Mittelspanungsnetz 50 gespeist wird. Zur Transformation zwischen den Netzen 50 und 30 ist in der Zentraleinheit 40 ein Transformator 42 vorgesehen. Durch den Transformator 42 wird die Mittelspannung des Mittelspannungsnetzes 50 in eine Niederspannung transformiert, die von einem, nicht gezeigten, Verteiler in eine Vielzahl von Verteilungssträngen des elektrischen Verteilnetzes 30 verteilt wird. Beispielsweise können an den Verteiler über einhundert Verteilungsstränge angeschlossen sein.

Die Zentraleinheit 40 umfasst ferner eine Steuerungsvorrichtung 45. Mit Hilfe der Steuerungsvorrichtung 45 kann die Zentraleinheit 40 elektrische Lasten und Energieerzeuger in den Häusern 20 und 21 aktivieren oder deaktivieren und/oder die einzelnen Systemkomponenten 10, 11 und 12 steuern und/oder regeln.

Bei der Steuerungsvorrichtung 45 kann es sich insbesondere um eine G100-kompatible Unterstationssteuerung handeln, siehe Energy Networks Association, Engineering Recommendation G100, Issue 1 Amendment 2 2018, Technical Requirements for Customer Export Limiting Schemes. Weitere, in der Fig. 1 nicht gezeigte Elemente, wie beispielsweise eine Betriebsparametererfassungsvorrichtung und Sende- und Empfangseinrichtung, können in der Zentraleinheit 40 vorgesehen sein.

Jedes der beispielhaft gezeigten Häuser 20, 21 kann mehrere Systemkomponenten des Verteilnetzes 30, zum Beispiel eine Photovoltaikanlage 10, einen elektrischen Energiespeicher 11 und eine Ladestation für ein Elektrofahrzeug 12 aufweisen. Weitere, in der Figur 1 nicht gezeigte, elektrische Lasten und elektrische Energieerzeuger, sowie ein Strommessgerät (zum Beispiel ein Smart Meter) können in jedem der Häuser 20, 21 an ein Hausnetz angeschlossen sein. Beispielsweise können die Häuser 20, 21 zusätzlich jeweils eine Wärmepumpe aufweisen.

Optional können die Häuser eine lokale Steuerungsvorrichtung 25 aufweisen. Dieses ist jedoch nicht zwingend notwendig. In dem in der Fig. 1 gezeigten Beispiel weist das Haus 20 eine lokale Steuerungsvorrichtung 25 auf, wohingegen das Haus 21 keine lokale Steuerungsvorrichtung aufweist.

Die lokale Steuerungsvorrichtung 25 kann systemkomponentenspezifische oder gerätespezifische Steuerungsbefehle und/oder die Leistungsabgabe des gesamten Hauses 20 betreffende Steuerbefehle von der Steuerungsvorrichtung 45 empfangen. Hierzu besteht eine "Powerline Communication"-Kommunikationsverbindung zwischen der Steuerungsvorrichtung 45 und der lokalen Steuerungsvorrichtung 25 in dem Haus 20.

Weiter kann die Steuerungsvorrichtung 45 die Systemkomponenten 10, 11, 12 auch unmittelbar steuern und/oder regeln und/oder die systemkomponentenspezifischen oder gerätespezifischen Steuerbefehle unmittelbar an die Systemkomponenten 10, 11, 12 senden. Hierzu kann die Steuerungsvorrichtung 45 ebenfalls eine "Powerline Communication"-Kommunikationsverbindung nutzen, d.h. eine Kommunikationsverbindung zwischen der Steuerungsvorrichtung 45 und den Systemkomponenten 10, 11, 12.

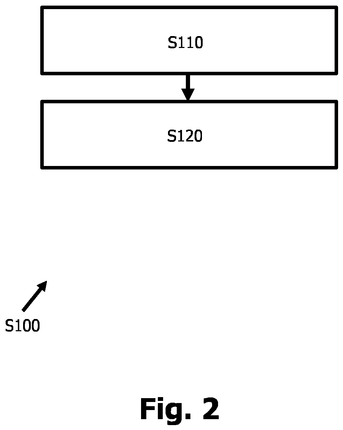

Die Fig. 2 zeigt ein Flussdiagramm eines Verfahrens S100 zur Steuerung von Systemkomponenten eines Verteilnetzes 30. In einem Schritt S110 ermittelt die Steuerungsvorrichtung 45 einen oder mehrere Betriebsparameter, zum Beispiel eine Netzspannung und eine Phasenverschiebung, des Mittelspannungsnetzes 50. Basierend auf dem oder den Betriebsparametern ermittelt die Steuerungsvorrichtung 45, ob und wie viel Leistung aus dem Verteilnetz 30 in das Mittelspannungsnetz 50 zurückgespeist werden kann und/oder ob eine Leistungsaufnahme der Systemkomponenten 10, 11, 12 des Verteilnetzes 30 angepasst werden kann, um das Mittelspannungsnetz 50 zu entlasten.

In einem anschließenden Schritt S120 steuert oder regelt die Steuerungsvorrichtung 45 eine oder mehrere der Systemkomponenten 10, 11, 12 des Verteilnetzes 30 basierend auf dem oder den ermittelten Betriebsparameter/n des Mittelspannungsnetzes 50. Dieses Steuern und/oder Regeln kann entweder unmittelbar durch die Steuerungsvorrichtung 45 oder auch mittelbar durch ein Zusammenwirken der Steuerungsvorrichtung 45 mit der lokalen Steuerungsvorrichtung 25 geschehen.

Wenn die Steuerungsvorrichtung 45 die einzelnen Systemkomponenten 10, 11, 12 mittelbar, d.h. im Zusammenwirken mit der lokalen Steuerungsvorrichtung 25 steuert, kann die lokale Steuerungsvorrichtung 25 in periodischen Abständen prüfen, ob die "Powerline Communication"-Kommunikationsverbindung mit der Steuerungsvorrichtung 45 ordnungsgemäß funktioniert. Ist dieses nicht der Fall, kann die lokale Steuerungsvorrichtung 25 eine sekundäre Kommunikationsverbindung, zum Beispiel eine Datenverbindung über ein Mobilfunknetzwerk, aktivieren, um Steuerungs-, Regelungs- und/oder Betriebsparameterinformationen mit der Steuerungsvorrichtung 45 auszutauschen.

Das Steuern und/oder Regeln der Systemkomponenten 10, 11, 12 des Verteilnetzes durch die Steuerungsvorrichtung 45 kann neben einem Aktivieren und/oder Deaktivieren einzelner Systemkomponenten und/oder einer Drosselung oder Erhöhung der jeweils aufgenommenen oder abgegebenen elektrischen Leistung insbesondere eine Änderung des Betriebsmodus einzelner Systemkomponenten umfassen.

Zum Beispiel kann die Steuerungsvorrichtung 45, entweder unmittelbar oder im Zusammenwirken mit der lokalen Steuerungsvorrichtung 25, den Betriebsmodus einer Photovoltaikanlage 10 und/oder eines Wechselrichters einer Photovoltaikanlage steuern oder ändern.

Zum Beispiel kann die Steuerungsvorrichtung 45 dazu eingerichtet sein, einen Betriebsmodus einer Photovoltaikanlage 10, insbesondere einen Betriebsmodus eines Wechselrichters der Photovoltaikanlage, zu aktivieren und/oder zu deaktivieren, bei welchem die Ausgangsleistung der Photovoltaikanlage 10 oder des Wechselrichters in Abhängigkeit von einer Netzspannung des Verteilnetzes 30 verändert wird.

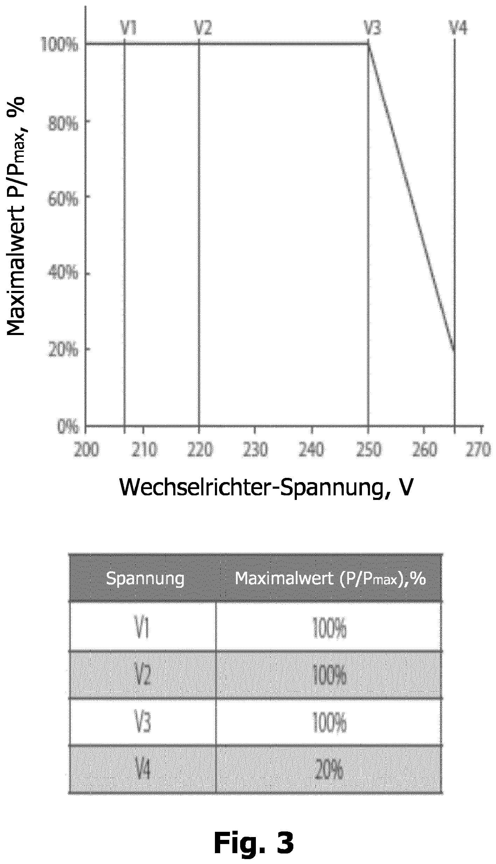

Ein solcher Betriebsmodus kann als aktiver Betriebsmodus oder Wirkleistungsbetriebsmodus bezeichnet werden. Ein Beispiel für einen solchen Betriebsmodus wird in der Fig. 3 gezeigt. Bis zu einer vorbestimmten Netzspannung V3 (im gezeigten Beispiel 250V) wird die durch die Photovoltaikanlage 10 erzeugte Leistung vollständig in das Verteilnetz 30 eingespeist. Übersteigt die tatsächliche Netzspannung des Verteilnetzes 30 die vorbestimmte Netzspannung V3, wird die in das Verteilnetz 30 eingespeiste Leistung abhängig von der Höhe der tatsächlichen Netzspannung des Verteilnetzes 30 verringert.

Weiter kann die Steuerungsvorrichtung 45 dazu eingerichtet sein, einen Betriebsmodus einer Photovoltaikanlage 10, insbesondere einen Betriebsmodus eines Wechselrichters der Photovoltaikanlage, zu aktivieren und/oder zu deaktivieren, bei dem ein Verhältnis zwischen Blindleistungsanteil und Wirkleistungsanteil der Ausgangsleistung der Photovoltaikanlage oder des Wechselrichters in Abhängigkeit von einer Netzspannung des Verteilnetzes 30 verändert wird.

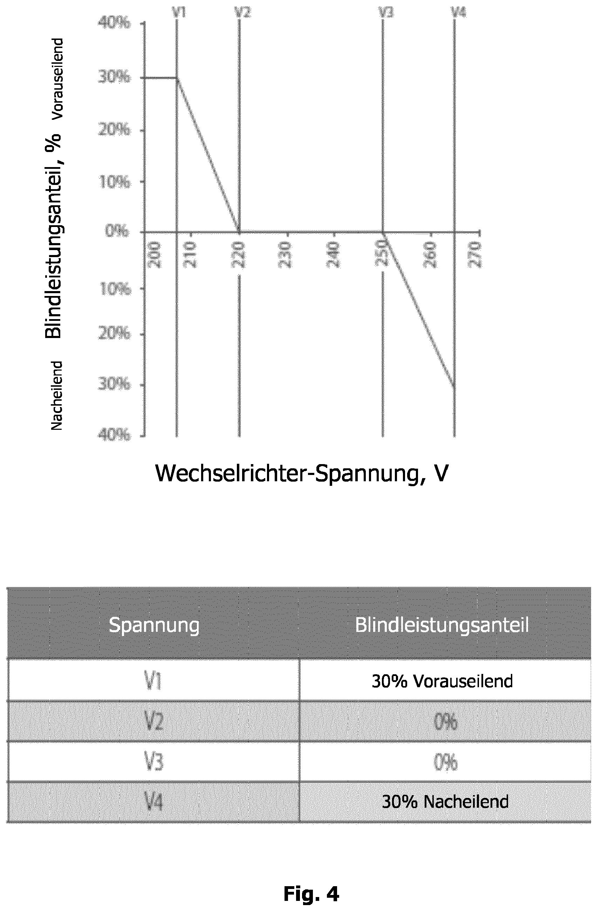

Ein solcher Betriebsmodus kann als reaktiver Betriebsmodus oder Scheinleistungsbetriebsmodus bezeichnet werden. Ein Beispiel für einen solchen Betriebsmodus wird in der Fig. 4 gezeigt. Innerhalb eines vorbestimmten Spannungsbereichs V2 bis V3 (im gezeigten Beispiel der Spannungsbereich von 220V bis 250V) wird die durch die Photovoltaikanlage erzeugte Leistung vollständig als Wirkleistung in das Verteilnetz 30 eingespeist. Außerhalb dieses Spannungsbereiches wird ein Teil der in das Verteilnetz 30 eingespeisten Leistung abhängig von der Höhe der tatsächlichen Netzspannung des Verteilnetzes 30 als Blindleistung in das Verteilnetz 30 eingespeist.

Ein Vorteil des Steuerungssystems 100 und des Verfahrens S100 zur Steuerung von Systemkomponenten ist, dass die Systemkomponenten 10, 11, 12 abhängig von Betriebsparametern des Mittelspannungsnetzes 50 gesteuert und/oder geregelt werden können. Zum Beispiel kann ein Betriebsmodus der Systemkomponenten 10, 11, 12 des Verteilnetzes oder Niederspannungsnetzes 30, der insbesondere eine Reaktion der Systemkomponenten auf Spannungsänderungen im Verteilnetz oder Niederspannungsnetz 30 vorgibt, abhängig von Betriebsparametern, zum Beispiel abhängig von einer Netzspannung, des Mittelspannungsnetzes 50 geändert werden.

Das Steuersystem 100 und das Verfahren S100 erlauben hierdurch einerseits eine beschleunigte Reaktion auf Parameterveränderungen im Mittelspannungsnetz 50. Das System und/oder das Verfahren können bereits reagieren, bevor eine Überlastung des Mittelspannungsnetzes 50 negative Auswirkungen auf das mit dem Mittelspannungsnetz 50 gekoppelte Verteilnetz oder Niederspannungsnetz 30 zeigt.

Andererseits greifen das Steuersystem 100 und das Verfahren S100 bereits vor der Einspeisung und/oder vor der Entnahme von elektrischer Leistung aus dem Verteilnetz oder Niederspannungsnetz 30 ein, nämlich unmittelbar bei den Erzeugern und/oder Verbrauchern der elektrischen Energie selbst. Hierdurch kann die Netzinfrastruktur, insbesondere die Netzinfrastruktur des Verteilnetzes oder Niederspannungsnetzes 30, zum Beispiel im Fall einer Überlastung des Mittelspannungsnetzes 50, geschont werden. Die Steuerungsvorrichtung 45 kann in diesem Fall zum Beispiel aktiv einige Erzeuger von elektrischer Energie vorübergehend deaktivieren oder drosseln, sodass überschüssige Leistung, die nicht mehr in ein Überlastetes Mittelspannungsnetz 50 abgeführt werden kann, gar nicht erst in das Verteilnetzes oder Niederspannungsnetz 30 eingespeist wird.

Die hier beschriebenen Varianten der Vorrichtung sowie deren Funktions- und Betriebsaspekte dienen lediglich dem besseren Verständnis ihrer Struktur, Funktionsweise und Eigenschaften; sie schränken die Offenbarung nicht etwa auf die Ausführungsformen ein. Die gezeigten Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen den beschriebenen Vorrichtungen zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst und können zum Gegenstand weiterer Ansprüche gemacht werden. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Ein Steuerungssystem (100) für Systemkomponenten (10, 11, 12) eines Verteilnetzes (30) für elektrische Energie, aufweisend
eine Steuerungsvorrichtung (45), die dazu eingerichtet ist, eine oder mehrere Systemkomponente/n (10, 11, 12) eines ersten Verteilnetzes (30) für elektrische Energie basierend auf zumindest einem Betriebsparameter eines zweiten Verteilnetzes (50) für elektrische Energie zu steuern und/oder zu regeln, wobei
das erste Verteilnetz (30) eine niedrigere Netzspannung aufweist als das zweite Verteilnetz (50), und
das erste Verteilnetz (30) durch einen Transformator (42) mit dem zweiten Verteilnetz (50) gekoppelt ist.

2. Steuerungssystem (100) nach Anspruch 1, wobei
das erste Verteilnetz (30) für elektrische Energie ein Niederspannungsnetz und/oder ein Verteilnetz zur Netzanbindung von Verbrauchern und/oder Erzeugern von elektrischer Energie ist, und/oder
das zweite Verteilnetz (50) für elektrische Energie ein Mittelspannungsnetz und/oder ein Verteilnetz zur Energieversorgung jeweils weiterer Verteilnetze, insbesondere weiterer Verteilnetze mit jeweils niedrigerer Netzspannung als das zweite Verteilnetz, ist, und/oder
der Transformator (42) ein Teil einer Transformatorstation (40) ist, welche das erste Verteilnetz (30) mit dem zweiten Verteilnetz (50) koppelt.

3. Steuerungssystem (100) nach einem der vorangegangenen Ansprüche, wobei
die Steuerungsvorrichtung (45) weiter dazu eingerichtet ist, die eine oder mehreren Systemkomponente/n (10, 11, 12) des ersten Verteilnetzes für elektrische Energie basierend auf zumindest einem Betriebsparameter des ersten Verteilnetzes (30) und basierend auf zumindest einem Betriebsparameter des zweiten Verteilnetzes (50) für elektrische Energie zu steuern und/oder zu regeln, und/oder
der Betriebsparameter des ersten Verteilnetzes (30) und/oder der Betriebsparameter des zweiten Verteilnetzes (50) Informationen über eine Gleichspannung, eine Wechselspannung, eine Gleichstromstärke, eine Wechselstromstärke, eine Scheinleistung, eine Wirkleistung, eine Blindleistung und/oder eine Phasenverschiebung an einem vorbestimmten Messpunkt innerhalb des ersten und/oder zweiten Verteilnetzes umfasst, und/oder
der Betriebsparameter des ersten Verteilnetzes (30) und/oder der Betriebsparameter des zweiten Verteilnetzes (50) Informationen über einen Aktivierungszustand und/oder einen Betriebsmodus einer Systemkomponente des ersten und/oder des zweiten Verteilnetzes umfasst, und/oder
der Betriebsparameter des ersten Verteilnetzes (30) und/oder der Betriebsparameter des zweiten Verteilnetzes (50) Informationen über die Art und/oder Anzahl der Systemkomponenten des ersten und/oder zweiten Verteilnetzes umfasst.

4. Steuerungssystem (100) nach einem der vorangegangenen Ansprüche, wobei
eine oder mehrere Systemkomponente/n des ersten Verteilnetzes (30) von der Steuerungsvorrichtung (45) und/oder von dem Transformator (42) räumlich beabstandet sind, und/oder
zumindest eine Systemkomponente des ersten Verteilnetzes (30) ein Energieverbraucher, zum Beispiel eine mit elektrischem Strom betriebene Heizung oder eine mit elektrischem Strom betriebene Maschine, ist, und/oder
zumindest eine Systemkomponente des ersten Verteilnetzes (30) ein Erzeuger von elektrischer Energie, zum Beispiel eine Solarenergieanlage oder eine Biomasseverstromungsanlage, ist, und/oder
zumindest eine Systemkomponente des ersten Verteilnetzes (30) ein mit elektrischer Energie aufladbarer und/oder entladebarer Energiespeicher, zum Beispiel ein Akkumulator oder ein mit elektrischer Energie betriebenes Kraftfahrzeug, ist.

5. Steuerungssystem (100) nach einem der vorangegangenen Ansprüche, weiter aufweisend
eine Betriebsparametererfassungsvorrichtung, die dazu eingerichtet ist, zumindest einen Betriebsparameter des ersten Verteilnetzes (30) und/oder zumindest einen Betriebsparameter des zweiten Verteilnetzes (50) zu erfassen, und/oder
eine Empfangseinheit, die dazu eingerichtet ist, ein Signal mit einer Information über zumindest einen Betriebsparameter des ersten Verteilnetzes (30) und/oder ein Signal mit einer Information über zumindest einen Betriebsparameter des zweiten Verteilnetzes (50) zu empfangen.

6. Steuerungssystem (100) nach einem der vorangegangenen Ansprüche, weiter aufweisend
eine Sendeeinheit, die dazu eingerichtet ist, ein Signal mit einer Steuer- und/oder Regelungsinformation an eine, insbesondere von der Steuerungsvorrichtung und der Sendeeinheit räumlich beabstandete, Systemkomponente (10, 11, 12) des ersten Verteilnetzes (30) zu senden.

7. Steuerungssystem (100) nach dem vorangegangenen Anspruch, wobei
die Sendeeinheit eine kombinierte Sende- und Empfangseinheit ist, welche weiter dazu eingerichtet ist, ein Signal mit einer Information über zumindest einen Betriebsparameter des ersten Verteilnetzes (30) und/oder ein Signal mit einer Information über zumindest einen Betriebsparameter des zweiten Verteilnetzes (50) zu empfangen, und/oder
wobei die Sendeeinheit dazu eingerichtet ist, mittels Powerline Communication mit zumindest einer Systemkomponente (10, 11, 12) des ersten Verteilnetzes (30) zu kommunizieren.

8. Steuerungssystem (100) nach einem der vorangegangenen Ansprüche, wobei
die Steuerungsvorrichtung (45) weiter dazu eingerichtet ist, eine technische Spezifikation des ersten und/oder zweiten Verteilnetzes (30, 50) zu speichern und/oder zu erfassen, und/oder
die Steuerungsvorrichtung (45) weiter dazu eingerichtet ist, eine oder mehrere Systemkomponente/n (10, 11, 12) des ersten Verteilnetzes (30) basierend auf der erfassten technischen Spezifikation und/oder basierend auf einer vorbestimmten technischen Spezifikation für ein Verteilnetz zu steuern und/oder zu regeln.

9. Steuerungssystem (100) nach einem der vorangegangenen Ansprüche, wobei
die Steuerungsvorrichtung (45) dazu eingerichtet ist, die eine oder mehreren Systemkomponente/n (10, 11, 12) des ersten Verteilnetzes derart zu steuern und/oder zu regeln, dass
eine oder mehrere Systemkomponenten (10, 11, 12) aktiviert und/oder deaktiviert werden, und/oder
ein Betriebsmodus einer Systemkomponente (10, 11, 12) geändert wird, insbesondere ein aktiver Betriebsmodus für eine Systemkomponente in einen reaktiven Betriebsmodus für eine Systemkomponente geändert wird und/oder ein reaktiver Betriebsmodus für eine Systemkomponente in einen aktiven Betriebsmodus für eine Systemkomponente geändert wird.

10. Ein Verfahren (S100) zur Steuerung von Systemkomponenten eines Verteilnetzes (30) für elektrische Energie umfasst die Schritte:
- Ermitteln (S110) eines Betriebsparameters eines zweiten Verteilnetzes (50) für elektrische Energie;
- Steuern oder Regeln (S120) einer Systemkomponente (10, 11, 12) eines ersten Verteilnetzes (30) für elektrische Energie basierend auf dem ermittelten Betriebsparameter des zweiten Verteilnetzes für elektrische Energie, wobei
das erste Verteilnetz (30) eine niedrigere Netzspannung aufweist als das zweite Verteilnetz (50), und wobei
das erste Verteilnetz (30) durch einen Transformator (42) mit dem zweiten Verteilnetz (50) gekoppelt ist.
